# FASCICULE DE BREVET EUROPEEN

(11) **EP 2 895 771 B1**
(45) Date de publication et mention de la délivrance du brevet: **05.10.2016**
(21) Numéro de dépôt: 13767030.3
(22) Date de dépôt: 29.08.2013
(51) Int. Cl.: F16H 3/54, B60K 6/12, F16H 47/04, F16H 61/4096, B60W 10/103, B60W 20/00

(54) **CHAÎNE DE TRACTION POUR VÉHICULE HYBRIDE HYDRAULIQUE, PROCÉDÉ DE FONCTIONNEMENT DE LA CHAÎNE DE TRACTION, ET VÉHICULE HYBRIDE LA COMPRENANT**
ANTRIEBSSTRANG FÜR EIN HYDRAULISCHES HYBRIDFAHRZEUG, VERFAHREN ZUM BETREIBEN DES ANTRIEBSSTRANGS, UND HYBRIDFAHRZEUG DAMIT
POWERTRAIN FOR A HYDRAULIC HYBRID VEHICLE, METHOD FOR OPERATING THE POWERTRAIN, AND HYBRID VEHICLE COMPRISING IT

(30) Priorité: 17.09.2012 FR 1258707
(43) Date de publication de la demande: 22.07.2015
(73) Titulaire: Technoboost, 75116 Paris (FR)
(72) Inventeur: GOURVES, Frederic, F-95800 Courdimanche (FR)
(74) Mandataire: Rosenberg, Muriel Sylvie
(86) Numéro de dépôt international: PCT/FR2013/051994
(87) Numéro de publication internationale: WO 2014/041275

(56) Documents cités:
- EP-A2- 2 006 146
- FR-A1- 2 970 440
- FR-A6- 2 166 883

## Description

La présente invention concerne une chaîne de traction pour un véhicule hybride utilisant une énergie hydraulique, ainsi qu'un procédé de fonctionnement de cette chaîne, et un véhicule hybride comportant une telle chaîne de traction.

Une chaîne de traction selon le préambule de la revendication 1 est connue du document EP 2 006 146 A2.

Un type de véhicule hybride connu, présenté notamment par le document FR-A1-2970908, comporte une chaîne de traction comprenant un moteur thermique qui peut d'une part entraîner directement les roues motrices du véhicule, et d'autre part entraîner une pompe hydraulique afin de recharger des accumulateurs de pression hydraulique, cette pression servant ensuite à alimenter un moteur hydraulique de traction du véhicule.

En particulier, le moteur thermique peut être relié à un premier élément d'un système de répartition de puissance comportant un train planétaire, comprenant un deuxième élément relié aux roues motrices du véhicule, et un troisième élément relié à la pompe hydraulique rechargeant les accumulateurs. Par ailleurs, le moteur hydraulique recevant la pression de ces accumulateurs, peut être relié directement aux roues motrices pour les entraîner.

L'utilisation d'énergie hydraulique stockée permet notamment d'optimiser le fonctionnement du moteur thermique, et de réduire sa consommation ainsi que les émissions de gaz polluants. Le stockage d'énergie hydraulique permet de plus de rouler en mode hydraulique sans émission de gaz polluants, appelé mode « ZEV », le moteur thermique restant à l'arrêt.

Toutefois, un problème qui se pose avec ce type de chaîne de traction, est que le fonctionnement du moteur thermique n'est généralement pas optimisé pour les différents types de roulage. En particulier si les roulages pour les basses vitesses comprenant des variations de vitesse plus fréquentes, sont effectués avec un mode hybride, pour les vitesses du véhicule plus élevées le rapport de la transmission du moteur thermique n'est généralement pas optimisé pour donner les meilleurs rendements.

La présente invention a notamment pour but d'éviter ces inconvénients de la technique antérieure.

Elle propose à cet effet une chaîne de traction pour un véhicule hybride, comportant une pompe hydraulique rechargeant des accumulateurs de pression, qui est reliée au pignon solaire d'un train planétaire, un moteur thermique étant relié à la couronne, les roues motrices du véhicule étant reliées au porte-satellite de ce train planétaire, cette chaîne de traction comportant un moteur hydraulique alimenté par les accumulateurs, qui est relié aux roues motrices, caractérisée en ce qu'elle comporte un système de blocage du train planétaire, ainsi qu'une roue-libre placée sur l'entraînement de la pompe, qui permet au moteur thermique d'entraîner le véhicule en marche avant quand le train planétaire est bloqué, en laissant cette pompe à l'arrêt.

Un avantage de la chaîne de traction selon l'invention est qu'elle permet de réaliser différents modes de fonctionnement pour l'entraînement du véhicule, comprenant avec le train planétaire bloqué et la roue-libre débrayée, un mode sans démultiplication du train planétaire, comprenant un bon rendement du moteur thermique pour les vitesses du véhicule plus élevées et les puissances modérées, et avec le train planétaire débloqué, le pignon solaire prenant appui sur la pompe par la roue-libre, un mode à rapport court ou un mode à dérivation, donnant une démultiplication plus importante de la transmission du moteur thermique afin de délivrer un couple plus élevé sur les roues motrices

La chaîne de traction selon l'invention peut de plus comporter une ou plusieurs des caractéristiques suivantes, qui peuvent être combinées entre elles.

Avantageusement, le pignon solaire est relié à la pompe par plusieurs pignons formant une démultiplication.

En complément, la roue-libre peut comporter un système de blocage commandé.

Avantageusement, le moteur hydraulique entraîne les roues motrices par au moins deux rapports de vitesse.

En particulier, le train planétaire peut entraîner un différentiel lié aux roues motrices, par un premier arbre intermédiaire supportant des pignons, et le moteur hydraulique peut entraîner le différentiel par un deuxième arbre intermédiaire, la liaison entre ce moteur et ce deuxième arbre comportant plusieurs rapports de vitesse.

L'invention a aussi pour objet un procédé de fonctionnement d'une chaîne de traction pour un véhicule hybride, comportant une pompe hydraulique rechargeant des accumulateurs de pression, qui est reliée au pignon solaire d'un train planétaire, un moteur thermique étant relié à la couronne, les roues motrices du véhicule étant reliées au porte-satellite de ce train planétaire comprenant un système de blocage, une roue-libre placée sur l'entraînement de la pompe, permettant au moteur thermique d'entraîner le véhicule en marche avant quand le train planétaire est bloqué en laissant cette pompe à l'arrêt, cette chaîne de traction comportant un moteur hydraulique alimenté par les accumulateurs, qui est relié aux roues motrices, ce procédé étant caractérisé en ce qu'il commande un premier mode de fonctionnement « Rapport Long » pour des vitesses du véhicule assez importantes et des puissances de traction du véhicule assez faibles, comprenant un blocage du train planétaire par le système de blocage, ainsi qu'un deuxième mode de fonctionnement « Rapport Court » comprenant un déblocage de ce train et un blocage de la pompe hydraulique, pour des vitesses du véhicule assez importantes et des puissances de traction plus importantes.

Le procédé peut commander un troisième mode de fonctionnement « Dérivation » comprenant un déblocage du train planétaire et un déblocage de la pompe hydraulique, pour des vitesses plus faibles du véhicule et des puissances de traction importantes.

Le procédé peut commander un quatrième mode de fonctionnement « Impulsionnel » pour des vitesses du véhicule ainsi que des puissances de traction faibles, qui utilise le moteur hydraulique pour la traction du véhicule si les accumulateurs sont suffisamment chargés, et qui commande un démarrage du moteur thermique si ces accumulateurs ne sont pas assez chargés, afin d'entraîner la pompe et de les recharger.

En particulier, la roue-libre comportant un système de blocage commandé, lorsque le conducteur relâche la pédale d'accélérateur sur le premier mode de fonctionnement « Rapport Long », le procédé peut commander le déblocage du système de blocage de la roue-libre afin d'entraîner la pompe.

L'invention a de plus pour objet un véhicule hybride disposant d'une chaîne de traction utilisant l'énergie hydraulique, qui comporte l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma d'une chaîne de traction selon l'invention ; et
- la figure 2 est un diagramme présentant en fonction de la vitesse du véhicule et de la puissance de traction demandée, différents modes de fonctionnement donnés par un procédé de fonctionnement de cette chaîne de traction.

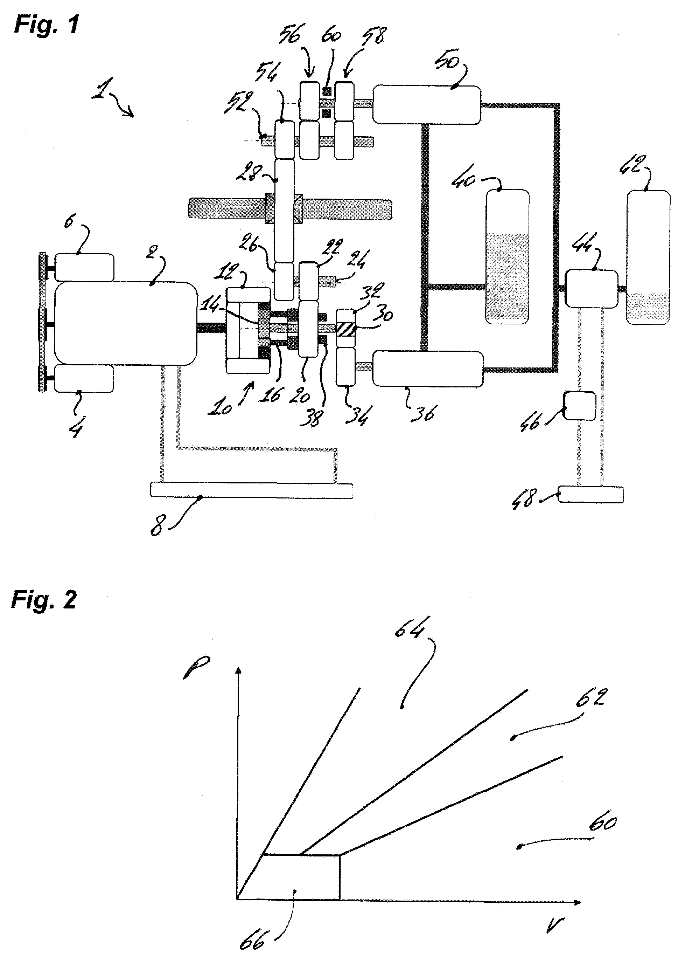

La figure 1 présente une chaîne de traction 1 d'un véhicule pilotée par un calculateur de contrôle non représenté, comprenant un moteur thermique 2 équipé d'un alternateur de production de courant électrique 4 et d'un compresseur de climatisation 6, qui entraîne directement la couronne 12 d'un train planétaire 10.

Le porte-satellite 16 du train planétaire 10 est fixé à un premier pignon 20 engrenant avec un deuxième pignon 22 fixé à un premier arbre intermédiaire 24, qui comporte un troisième pignon fixe 26 en prise avec la couronne d'un différentiel 28 répartissant le mouvement vers les deux roues motrices d'un même essieu. On réalise ainsi une démultiplication de vitesse constante, entre le porte-satellite 16 et les roues motrices.

Le pignon solaire 14 du train planétaire 10 est relié par une roue-libre 30, à un premier pignon 32 qui engrène avec un deuxième pignon 34 fixé sur l'arbre d'une pompe hydraulique 36 à cylindrée variable, ces deux pignons formant une démultiplication permettant d'ajuster la vitesse de rotation de la pompe.

Par convention, on appellera sens positif le sens de rotation du moteur thermique 2, et sens négatif le sens inverse.

La roue-libre 30 est disposée de manière à ne pas entraîner la pompe hydraulique 36 quand le pignon solaire 14 tourne avec le moteur thermique 2 dans le sens positif. A l'inverse le pignon solaire 14 tournant dans le sens négatif, permet un entraînement de la pompe 36.

Un premier dispositif de synchronisation 38 constitue un système de blocage du train planétaire 10, permettant de lier le porte-satellite 16 avec le pignon solaire 14, afin de réaliser une prise directe qui solidarise les trois éléments de ce train entre eux.

La pompe hydraulique 36 est reliée à un accumulateur haute pression 40, ainsi qu'à un accumulateur basse pression 42 par un bloc 44 comprenant un filtre et un échangeur thermique, cet échangeur étant refroidi par un circuit de fluide de refroidissement comprenant une pompe 46 et un échangeur thermique 48 avec l'air ambiant.

Les accumulateurs haute pression 40 et basse pression 42 alimentent un moteur hydraulique 50, qui peut entraîner un deuxième arbre intermédiaire 52 par deux couples de pignons 56, 58 comprenant des rapports de vitesse différents.

Un deuxième dispositif de synchronisation 60 comportant un manchon coulissant axialement, installé entre les deux pignons libres des deux couples de pignons 56, 58, portés par l'arbre de la machine hydraulique 50, permet d'engager l'un de ces pignons sur cet arbre pour sélectionner un rapport de vitesse. La position centrale du manchon réalise un point mort, laissant les deux rapports de vitesse 56, 58 dégagés.

Le deuxième arbre intermédiaire 52 comporte un pignon fixe 54 qui engrène directement avec la couronne du différentiel 28, afin de réaliser un entraînement du véhicule par le moteur hydraulique 50.

La figure 2 présente en fonction de la vitesse du véhicule V représentée sur l'axe horizontal, et de la puissance de traction du véhicule P demandée par le conducteur, représentée sur l'axe vertical, quatre modes de fonctionnement mis en oeuvre par un procédé de fonctionnement de cette chaîne de traction.

Un premier mode 60 appelé mode « Rapport Long », comprenant des vitesses du véhicule V assez élevées avec des puissances de traction P modérées, comporte quand le calculateur de contrôle de la chaîne de traction 1 demande au moteur thermique 2 un couple positif, un engagement du dispositif de synchronisation 38 afin de bloquer le train planétaire 10.

Le moteur thermique 2 délivre alors un couple transmis par le train planétaire 10 se trouvant en prise directe qui conserve la même vitesse, aux différents pignons afin d'entraîner les roues motrices. La roue-libre 30 est désengagée, en permettant au pignon solaire 14 du train planétaire 10 de tourner librement sans entraîner la pompe hydraulique 36.

On a alors un rapport long qui permet d'assurer les vitesses les plus élevés du véhicule avec une vitesse de rotation du moteur thermique 2 assez faible, ce qui assure un bon rendement.

Quand le calculateur de contrôle de la chaîne de traction 1 enregistre un relâchement de la pédale d'accélérateur, le dispositif de synchronisation 38 peut alors être ouvert afin de débloquer le train planétaire 10. On réalise ainsi un point mort qui permet de laisser le moteur thermique 2 à l'arrêt, afin de réduire les frottements et le freinage du véhicule.

Un deuxième mode 62 appelé mode « Rapport Court », comprenant des vitesses du véhicule V assez élevées avec des puissances de traction P importantes, comporte une ouverture du dispositif de synchronisation 38 afin de débloquer le train planétaire 10. De plus, le procédé réalise un blocage de la pompe hydraulique 36, par exemple en fermant la sortie hydraulique de cette pompe.

Le train planétaire 10 réalise alors une démultiplication de la vitesse donnée par le moteur thermique 2 sur la couronne 12, grâce au blocage du pignon solaire 14 prenant appui par la roue-libre 30 sur la pompe hydraulique 36 pour former un point de réaction, afin de délivrer une vitesse réduite ainsi qu'un couple plus élevé sur le porte-satellite 16.

Un troisième mode 64 appelé mode « Dérivation », comprenant des vitesses du véhicule V plus faibles avec des puissances de traction P importantes, comporte aussi une ouverture du dispositif de synchronisation 38 afin de débloquer le train planétaire 10.

Le pignon solaire 14 tourne dans le sens négatif. La roue-libre 30 étant engagée, entraîne la pompe hydraulique 36 avec une certaine vitesse de rotation, ce qui lui permet d'une part de recharger l'accumulateur haute pression 40, et d'autre part en contrôlant sa vitesse de rotation, notamment en ajustant sa cylindrée ce qui lui donne un couple variable, de disposer d'un point de réaction formé par le pignon solaire 14.

On obtient ainsi une démultiplication variable du train planétaire 10, plus élevée que celle du mode « Rapport Court » 62, qui est réglée par le couple de freinage de la pompe hydraulique 36 donné par sa cylindrée. Le moteur thermique 2 peut alors tourner à une vitesse plus importante, et délivrer une puissance plus élevée.

Un quatrième mode 66 appelé mode « Impulsionnel », comprenant des vitesses du véhicule V ainsi que des puissances P qui sont faibles, correspondant notamment à des parcours urbains, utilise en particulier les éléments hydrauliques de la chaîne de traction pour délivrer ou stocker une énergie, afin d'optimiser les rendements.

Si l'accumulateur haute pression 40 comporte suffisamment d'énergie, le moteur hydraulique 50 est alimenté afin de réaliser la traction du véhicule par l'un des deux rapports de vitesse 56, 58, ce qui permet d'optimiser la vitesse de rotation de ce moteur en privilégiant le couple délivré sur les roues avec la démultiplication la plus élevée, où la vitesse du véhicule avec la démultiplication la plus faible.

Le premier dispositif de synchronisation 38 est ouvert afin de débloquer le train planétaire 10, ce qui permet de laisser le moteur thermique 2 à l'arrêt, le pignon solaire 14 tournant librement dans le sens positif grâce à la roue-libre 30 qui est désengagée, et la pompe hydraulique 36 restant à l'arrêt.

Si l'accumulateur haute pression 40 ne comporte pas suffisamment d'énergie, le procédé arrête le moteur hydraulique 50, et démarre le moteur thermique 2 par son démarreur. Ce moteur thermique 2 entraîne alors dans le sens négatif, en prenant appui sur le porte-satellite 16 lié en rotation aux roues motrices formant un point de réaction, la pompe hydraulique 36 en passant par la roue-libre 30 qui est engagée. Le moteur thermique 2 transmet en même temps, directement aux roues motrices un certain couple.

Lorsque l'accumulateur haute pression 40 est plein, le procédé arrête le moteur thermique 2.

Pour la marche arrière du véhicule, on utilise le moteur hydraulique 50 avec un sens de rotation inversé, ainsi que le rapport de vitesse 56, 58 le plus démultiplié, afin de déplacer le véhicule avec une petite vitesse et un couple assez élevé. Ce rapport de vitesse plus démultiplié est d'autant plus nécessaire que le moteur hydraulique 50 est seul pour entraîner le véhicule en marche arrière, le moteur thermique 2 ne pouvant pas déplacer le véhicule dans ce sens.

On notera que la roue-libre 30 permet des transitions rapides et en douceur entre certains modes de fonctionnement, sans système de commande additionnel, par un simple engagement ou désengagement de cette roue-libre lors d'une inversion du couple qui s'applique dessus.

En complément, un système de blocage commandé comme un crabot peut être ajouté sur la roue-libre 30, afin de la bloquer en permanence quelque soit le sens du couple qui s'applique dessus. On peut obtenir notamment un entraînement de la pompe hydraulique 36 avec le premier mode de fonctionnement « Rapport Long » 60, qui entraîne alors systématiquement la pompe dans ce mode afin de récupérer l'énergie cinétique du véhicule lorsque le conducteur relâche la pédale d'accélérateur.

## Revendications

1. Chaîne de traction pour un véhicule hybride, comportant une pompe hydraulique (36) rechargeant des accumulateurs de pression (40, 42), qui est reliée au pignon solaire (14) d'un train planétaire (10), un moteur thermique (2) étant relié à la couronne (12) de ce train planétaire (10), les roues motrices du véhicule étant reliées au porte-satellite (16) de ce train planétaire, cette chaîne de traction (1) comportant un moteur hydraulique (50) alimenté par les accumulateurs (40, 42), qui est relié aux roues motrices, et un système de blocage du train planétaire (38), **caractérisée en ce qu'**elle comporte une roue-libre (30) placée sur l'entraînement de la pompe (36), qui permet au moteur thermique (2) d'entraîner le véhicule en marche avant quand le train planétaire (10) est bloqué, en laissant cette pompe à l'arrêt.

2. Chaîne de traction selon la revendication 1, **caractérisée en ce que** le pignon solaire (14) est relié à la pompe (36) par plusieurs pignons formant une démultiplication.

3. Chaîne de traction selon la revendication 1 ou 2, **caractérisée en ce que** la roue-libre (30) comporte un système de blocage commandé.

4. Chaîne de traction selon l'une quelconque des revendications précédentes, **caractérisée en ce que** le moteur hydraulique (50) entraîne les roues motrices par au moins deux rapports de vitesse (56, 58).

5. Chaîne de traction selon l'une quelconque des revendications précédentes, **caractérisée en ce que** le train planétaire (10) entraîne un différentiel (28) lié aux roues motrices, par un premier arbre intermédiaire (24) supportant des pignons (22, 26), et **en ce que** le moteur hydraulique (50) entraîne le différentiel par un deuxième arbre intermédiaire (52), la liaison entre ce moteur et ce deuxième arbre comportant plusieurs rapports de vitesse (56, 58).

6. Procédé de fonctionnement d'une chaîne de traction pour un véhicule hybride, comportant une pompe hydraulique (36) rechargeant des accumulateurs de pression (40, 42), qui est reliée au pignon solaire (14) d'un train planétaire (10), un moteur thermique (2) étant relié à la couronne (12) de ce train planétaire (10), les roues motrices du véhicule étant reliées au porte-satellite (16) de ce train planétaire comprenant un système de blocage (38), une roue-libre (30) placée sur l'entraînement de la pompe (36), permettant au moteur thermique (2) d'entraîner le véhicule en marche avant quand le train planétaire (10) est bloqué en laissant cette pompe à l'arrêt, cette chaîne de traction (1) comportant un moteur hydraulique (50) alimenté par les accumulateurs (40, 42), qui est relié aux roues motrices, ce procédé étant **caractérisé en ce qu'**il commande un premier mode de fonctionnement « Rapport Long » (60) pour des vitesses du véhicule (V) assez importantes et des puissances de traction du véhicule (P) assez faibles, comprenant un blocage du train planétaire (10) par le système de blocage (38), ainsi qu'un deuxième mode de fonctionnement « Rapport Court » (62) comprenant un déblocage de ce train et un blocage de la pompe hydraulique (36), pour des vitesses du véhicule assez importantes et des puissances de traction plus importantes.

7. Procédé de fonctionnement selon la revendication 6, **caractérisé en ce qu'**il commande un troisième mode de fonctionnement « Dérivation » (64) comprenant un déblocage du train planétaire (10) et un déblocage de la pompe hydraulique (36), pour des vitesses plus faibles du véhicule (V) et des puissances de traction (P) plus importantes.

8. Procédé de fonctionnement selon la revendication 5 ou 6, **caractérisé en ce qu'**il commande un quatrième mode de fonctionnement « Impulsionnel » (66) pour des vitesses du véhicule (V) ainsi que des puissances de traction (P) faibles, qui utilise le moteur hydraulique (50) pour la traction du véhicule si les accumulateurs (40) sont suffisamment chargés, et qui commande un démarrage du moteur thermique (2) si ces accumulateurs ne sont pas assez chargés, afin d'entraîner la pompe (36) et de les recharger.

9. Procédé de fonctionnement d'une chaîne de traction réalisée selon l'une quelconque des revendications 6 à 8, la roue-libre (30) comportant un système de blocage commandé, **caractérisé en ce que** lorsque le conducteur relâche la pédale d'accélérateur sur le premier mode de fonctionnement « Rapport Long » (60), il commande le déblocage du système de blocage de la roue-libre (30) afin d'entraîner la pompe (36).

10. Véhicule hybride disposant d'une chaîne de traction utilisant l'énergie hydraulique, **caractérisé en ce que** cette chaîne de traction est réalisée selon l'une quelconque des revendications 1 à 5.

## Patentansprüche

1. Antriebsstrang für ein Hybridfahrzeug, der eine Hydraulikpumpe (36) umfasst, die Druckspeicher (40, 42) auflädt, die mit dem Sonnenrad (14) eines Planetengetriebezugs (10) verbunden ist, eine Brennkraftmaschine (2), die mit dem Kranz (12) dieses Planetengetriebezugs (10) verbunden ist, wobei die Antriebsräder des Fahrzeugs mit dem Satellitenträger (16) dieses Planetengetriebezugs verbunden sind, wobei dieser Antriebsstrang (1) einen Hydraulikmotor (50) umfasst, der von den Speichern (40, 42) versorgt ist, der mit den Antriebsrädern verbunden ist, und ein Blockierungssystem des Planetengetriebezugs (38), **dadurch gekennzeichnet, dass** er ein Freilaufrad (30) umfasst, das auf dem Antrieb der Pumpe (36) platziert ist, das es der Brennkraftmaschine (2) erlaubt, das Fahrzeug im Vorwärtsgang anzutreiben, wenn der Planetengetriebezug (10) blockiert ist, indem diese Pumpe im Stillstand gelassen wird.

2. Antriebsstrang nach Anspruch 1, **dadurch gekennzeichnet, dass** das Sonnenrad (14) mit der Pumpe (36) durch mehrere Ritzel, die eine Untersetzung bilden, verbunden ist.

3. Antriebsstrang nach Anspruch 1 oder 2, **dadurch gekennzeichnet, dass** das Freilaufrad (30) ein gesteuertes Blockierungssystem umfasst.

4. Antriebsstrang nach einem der vorhergehenden Ansprüche, **dadurch gekennzeichnet, dass** der Hydraulikmotor (50) die Antriebsräder durch mindestens zwei Gänge (56, 58) antreibt.

5. Antriebsstrang nach einem der vorhergehenden Ansprüche, **dadurch gekennzeichnet, dass** der Planetengetriebzug (10) ein Differenzial (28), das mit den Antriebsrädern verbunden ist, durch eine erste Zwischenwelle (24) antreibt, die Ritzel (22, 26) trägt, und dass der Hydraulikmotor (50) das Differenzial durch eine zweite Zwischenwelle (52) antreibt, wobei die Verbindung zwischen diesem Motor und dieser zweiten Welle mehrere Gänge (56, 58) umfasst.

6. Betriebsverfahren eines Antriebsstrangs für ein Hybridfahrzeug, der eine Hydraulikpumpe (36) umfasst, die Druckspeicher (40, 42) auflädt, die mit dem Sonnenrad (14) eines Planetengetriebezugs (10) verbunden ist, wobei eine Brennkraftmaschine (2) mit dem Kranz (12) dieses Planetengetriebezugs (10) verbunden ist, wobei die Antriebsräder des Fahrzeugs mit dem Satellitenträger (16) dieses Planetengetriebezugs verbunden sind, das ein Blockierungssystem (38), ein Freilaufrad (30), das auf dem Antrieb der Pumpe (36) platziert ist, umfasst, das es der Brennkraftmaschine (2) erlaubt, das Fahrzeug im Vorwärtsgang anzutreiben, wenn der Planetengetriebezug (10) blockiert ist, indem diese Pumpe im Stillstand gelassen wird, wobei dieser Antriebsstrang (1) einen Hydraulikmotor (50) umfasst, der von Speichern (40, 42) versorgt wird, der mit den Antriebsrädern verbunden ist, Verfahren **dadurch gekennzeichnet, dass** es einen ersten Betriebsmodus "langer Gang" (60) für relativ hohe Geschwindigkeiten des Fahrzeugs (V) und relativ niedrige Antriebsleistungen des Fahrzeugs (P) steuert, der ein Blockieren des Planetengetriebezugs (10) durch das Blockierungssystem (38) umfasst, sowie einen zweiten Betriebsmodus "kurzer Gang" (62), der ein Lösen dieses Antriebsstrangs und ein Blockieren der Hydraulikpumpe (36) für relativ hohe Geschwindigkeiten des Fahrzeugs und höhere Antriebsleistungen umfasst.

7. Betriebsverfahren nach Anspruch 6, **dadurch gekennzeichnet, dass** es einen dritten Betriebsmodus "Abzweigung" (64) steuert, der ein Lösen des Planetengetriebezugs (10) und ein Entriegeln der Hydraulikpumpe (36) für niedrigere Geschwindigkeiten des Fahrzeugs (V) und höhere Antriebsleistungen (P) umfasst.

8. Betriebsverfahren nach Anspruch 5 oder 6, **dadurch gekennzeichnet, dass** es einen vierten "impulsweisen" Betriebsmodus (66) für niedrige Geschwindigkeiten des Fahrzeugs (V) sowie niedrige Antriebsleistungen (P) umfasst, das einen Hydraulikmotor (50) zum Antreiben des Fahrzeugs umfasst, falls die Speicher (40) ausreichend geladen sind, und ein Starten der Brennkraftmaschine (2) steuert, falls diese Speicher nicht ausreichend geladen sind, um die Pumpe (36) anzutreiben und sie aufzuladen.

9. Betriebsverfahren eines Antriebsstrangs, der nach einem der Ansprüche 6 bis 8 hergestellt ist, wobei das Freilaufrad (30) ein gesteuertes Blockierungssystem umfasst, **dadurch gekennzeichnet, dass**, wenn der Fahrer das Gaspedal auf dem ersten Betriebsmodus "langer Gang" (60) freigibt, er das Lösen des Blockierungssystems des Freilaufrads (30) steuert, um die Pumpe (36) anzutreiben.

10. Hybridfahrzeug, das über einen Antriebsstrang verfügt, der hydraulische Energie verwendet, **dadurch gekennzeichnet, dass** dieser Antriebsstrang nach einem der Ansprüche 1 bis 5 hergestellt ist.

## Claims

1. A powertrain for a hybrid vehicle, comprising a hydraulic pump (36) recharging pressure accumulators (40, 42), which is linked to the sun gear (14) of a planetary gear train (10), an internal combustion engine (2) being linked to the ring gear (12) of this planetary gear train (10), the drive wheels of the vehicle being linked to the planet carrier (16) of this planetary gear train, this powertrain (1) comprising a hydraulic engine (50) supplied by the accumulators (40, 42), which is linked to the drive wheels, and a system for immobilizing the planetary gear train (38), **characterized in that** it comprises a free wheel (30) positioned on the drive of the pump (36), which enables the internal combustion engine (2) to drive the vehicle forward when the planetary gear train (10) is blocked, leaving this pump stopped.

2. The powertrain according to Claim 1, **characterized in that** the sun gear (14) is linked to the pump (36) by a plurality of gears forming a reduction.

3. The powertrain according to Claim 1 or 2, **characterized in that** the free wheel (30) comprises a controlled immobilizing system.

4. The powertrain according to any one of the preceding claims, **characterized in that** the hydraulic engine (50) drives the drive wheels by at least two gear ratios (56, 58).

5. The powertrain according to any one of the preceding claims, **characterized in that** the planetary gear train (10) drives a differential (28) linked to the drive wheels, by a first intermediate shaft (24) supporting gears (22, 26), and **in that** the hydraulic engine (50) drives the differential by a second intermediate shaft (52), the connection between this engine and this second shaft comprising a plurality of gear ratios (56, 58).

6. An operating method of a powertrain for a hybrid vehicle, comprising a hydraulic pump (36) recharging pressure accumulators (40, 42), which is linked to the sun gear (14) of a planetary gear train (10), an internal combustion engine (2) being linked to the ring gear (12) of this planetary gear train (10), the drive wheels of the vehicle being linked to the planet carrier (16) of this planetary gear train including an immobilizing system (38), a free wheel (30) positioned on the drive of the pump (36), which enables the internal combustion engine (2) to drive the vehicle forward when the planetary gear train (10) is blocked, leaving said pump stopped, this powertrain (1) comprising a hydraulic engine (50) supplied by the accumulators (40, 42), which is linked to the drive wheels, this method being **characterized in that** it controls a first mode of operation "Long Ratio" (60) for quite high speeds of the vehicle (V) and quite low traction powers of the vehicle (P), including a blocking of the planetary gear train (10) by the immobilizing system (38), and a second mode of operation "Short Ratio" (62) including an unblocking of this train and a blocking of the hydraulic pump (36), for quite high speeds of the vehicle and greater traction powers.

7. The operating method according to Claim 6, **characterized in that** it controls a third mode of operation "Bypass" (64) including an unblocking of the planetary gear train (10) and an unblocking of the hydraulic pump (36), for lower speeds of the vehicle (V) and greater traction powers (P).

8. The operating method according to Claim 5 or 6, **characterized in that** it controls a fourth mode of operation "Pulse" (66) for low speeds of the vehicle (V) and low traction powers (P), which uses the hydraulic engine (50) for the traction of the vehicle if the accumulators (40) are sufficiently charged, and which commands a starting of the internal combustion engine (2) if these accumulators are not charged enough, so as to drive the pump (36) and to recharge them.

9. The operating method of a powertrain realized according to any one of Claims 6 to 8, the free wheel (30) comprising a controlled immobilizing system, **characterized in that** when the driver releases the accelerator pedal on the first mode of operation "Long Ratio" (60), he commands the unblocking of the immobilizing system of the free wheel (30) so as to drive the pump (36).

10. A hybrid vehicle having a powertrain using hydraulic energy, **characterized in that** this powertrain is realized according to any one of Claims 1 to 5.
